# EUROPEAN PATENT SPECIFICATION

(11) **EP 3 494 776 B1**
(45) Date of publication and mention of the grant of the patent: **02.06.2021**
(21) Application number: 16916285.6
(22) Date of filing: 16.09.2016
(51) Int. Cl.: A01G 9/18, B01D 53/04, B01D 53/26, B01D 53/50, F23J 15/04, F23J 15/06

(54) **PURIFICATION DEVICE**
REINIGUNGSVORRICHTUNG
DISPOSITIF DE PURIFICATION

(43) Date of publication of application: 12.06.2019
(73) Proprietor: Futaba Industrial Co., Ltd., Okazaki-shi, Aichi 444-8558 (JP)
(72) Inventor: KATO, Hisayuki, Okazaki-shi, Aichi 444-8558 (JP); SAITO, Takashi, Okazaki-shi, Aichi 444-8558 (JP)
(74) Representative: Barker Brettell LLP
(86) International application number: PCT/JP2016/077532
(87) International publication number: WO 2018/051504

(56) References cited:
- WO-A1-2015/190213
- JP-A- S62 129 605
- JP-A- 2013 074 887
- JP-A- 2015 126 708
- JP-B1- S49 866
- JP-U- 3 025 591

## Description

### TECHNICAL FIELD

The present disclosure relates to a purification device that purifies exhaust gas generated by combustion to heat a greenhouse for plant cultivation.

### BACKGROUND ART

In a carbon dioxide application device of JP 2015126708 A, during night-time, exhaust gas exits a chimney of a boiler that heats an agricultural greenhouse for facility horticulture and carbon dioxide contained in the exhaust gas is accumulated in a tank. During day-time, accumulated carbon dioxide in the tank is supplied into the agricultural greenhouse. This facilitates photosynthesis of a horticultural crop.

The tank of such a carbon dioxide application device stores an adsorbent for carbon dioxide, such as activated carbon, zeolite, and the like. The adsorbent adsorbs the carbon dioxide contained in the exhaust gas and therefore, the carbon dioxide is accumulated. In order to suitably adsorb the carbon dioxide on the adsorbent, it is necessary to decrease a temperature of the exhaust gas using a heat exchanger or the like.

JP 2013074887 A provides a carbon dioxide feeder to a horticultural facility that includes, in this order, a means of bringing the concentration of nitrogen oxides and sulphur oxides in flue gas, generated in a carbon dioxide supply source, to equal to or lower than a concentration affecting no plant growth, and dehumidifying so as not to affect the adsorption performance of carbon dioxide, and a means of collecting and storing the carbon dioxide contained in the flue gas by using a carbon dioxide absorbent for adsorption and desorption by concentration difference of carbon dioxide, and further includes a means of discharging the carbon dioxide stored in the carbon dioxide absorbent to the horticultural facility by sending dehumidified air when needed in the horticultural facility.

WO2015190213 A1 illustrates another purification device that purifies exhaust gas generated by combustion to heat a greenhouse.

### SUMMARY OF THE INVENTION

### PROBLEMS TO BE SOLVED BY THE INVENTION

However, there may be a risk that cooling of the exhaust causes condensation of vapor contained in the exhaust gas, which generates condensed water. If the exhaust gas includes sulfur oxide, nitrogen oxide, or other chemical compounds, the condensed water may contain sulfuric acid, nitric acid, or the like. As a result, if the condensed water flows into the chimney of the boiler, flowed condensed water may corrode the chimney. Further, the carbon dioxide application device of Patent Document 1 cools the exhaust gas through a flow path that horizontally branches from the chimney of the boiler. As a result, the condensed water stays on the flow path, which may corrode a wall surface of the flow path.

It is desirable to inhibit corrosion caused by the condensed water that is generated by the cooling of the exhaust gas.

### MEANS FOR SOLVING THE PROBLEMS

The present invention provides a purification device that purifies exhaust gas generated by combustion to heat a greenhouse for plant cultivation as defined in the appended claims. The purification device comprises an exhaust gas flow path, a downstream portion, and a cooler. The exhaust gas flow path carries the exhaust gas along a specified downstream direction and includes a cooling section that directs downward as extending along the downstream direction. The downstream portion carries the exhaust gas generated by the combustion into the exhaust gas flow path and carries the exhaust gas through the exhaust gas flow path along the downstream direction. The cooler cools the exhaust gas flowing through the cooling section.

Such a configuration enables the exhaust gas to be cooled when the exhaust gas flows through the cooling section of the exhaust gas flow path. The cooling section directs downward as extending along the downstream direction. As a result, condensed water generated by cooling is carried through the cooling section along the downstream direction and is inhibited from staying in one location. Additionally, the condensed water is inhibited from flowing opposite to the downstream direction (in other words, from flowing through the exhaust gas flow path in reverse). As a result, it is possible to inhibit the condensed water from flowing into a chimney or the like of the heater, which is a generation source of the exhaust gas. Accordingly, it is possible to inhibit corrosion caused by the condensed water that is generated by the cooling of the exhaust gas.

The purification device further comprises a purifying solution accumulator. The purifying solution accumulator is situated downstream of the cooler along the downstream direction in the exhaust gas flow path, stores a purifying solution to purify the exhaust gas, and brings the exhaust gas flowing through the exhaust gas flow path into contact with the purifying solution. The exhaust gas flow path further includes a flow-in section. The flow-in section carries the condensed water generated by the cooling of the exhaust gas by the cooler into the purifying solution accumulated in the purifying solution accumulator.

Such a configuration enables purification of the condensed water with the purifying solution and elimination of corrosive activity of the condensed water. Thus, it is possible to inhibit the corrosion of the purification device caused by the condensed water.

The purification device may further comprise a purifier that is situated downstream of the purifying solution accumulator along the downstream direction in the exhaust gas flow path and that purifies the exhaust gas flowing through the exhaust gas flow path.

According to this configuration, it is possible to further purify the exhaust gas. Thus, it is possible to release the exhaust gas into the atmosphere and into the greenhouse.

The purification device may further comprise an accumulator and a supplier. The accumulator is situated downstream of the purifier along the downstream direction in the exhaust gas flow path and accumulates carbon dioxide contained in the exhaust gas flowing through the exhaust gas flow path. The supplier supplies the carbon dioxide accumulated in the accumulator with the greenhouse.

Such a configuration can accumulate, in the accumulator, the carbon dioxide contained in the exhaust gas generated by the heating of the greenhouse during night-time. Also, it is possible to supply the carbon dioxide accumulated in the accumulator with the greenhouse during day-time. Accordingly, this can facilitate growth of a crop cultivated in the greenhouse.

The purification device may further comprise a detector that detects that the combustion is performed to heat the greenhouse. The downstream portion may carry the exhaust gas into the exhaust gas flow path in response to detection of the combustion by the detector and carry the exhaust gas through the exhaust gas flow path along the downstream direction.

According to this configuration, it is possible to surely purify the exhaust gas with the purification device while the greenhouse is heated.

### BRIEF DESCRIPTION OF THE DRAWINGS

FIG. 1 is a block diagram of a carbon dioxide supply device according to the present embodiment.
FIG. 2A is a modified example of an exhaust gas flow path in the carbon dioxide supply device of the present embodiment.
FIG. 2B is a modified example of the exhaust gas flow path in the carbon dioxide supply device of the present embodiment.
FIG. 2C is a modified example of the exhaust gas flow path in the carbon dioxide supply device of the present embodiment.

### EXPLANATION OF REFERENCE NUMERALS

1 ··· carbon dioxide supply device, 2 ··· greenhouse, 3 ··· heater, 4 ··· emission flow path, 4a···temperature sensor, 10···exhaust gas flow path, 11··· downward section , 20···heat exchanger, 30···neutralization tank, 31···purifying solution, 40···blower, 50···purifier, 60···accumulator, 70···controller

### [Correspondence to the Scope of Claims]

The carbon dioxide supply device 1 corresponds to one example of the purification device; the downward section 11 corresponds to one example of the cooling section and the flow-in section; the heat exchanger 20 corresponds to one example of the cooler; and the neutralization tank 30 corresponds to one example of the purifying solution accumulator. The blower 40 and the controller 70 correspond to one example of the downstream portion. The exhaust gas flow path 10, the blower 40, and the controller 70 correspond to one example of the supplier. The temperature sensor 4a and the controller 70 correspond to one example of the detector.

### MODE FOR CARRYING OUT THE INVENTION

Hereinafter, a description is given to an embodiment of the present disclosure with reference to the drawings. It should be noted that a mode for carrying out the present disclosure is not limited to embodiments described below and can be modified variously within the technical scope of the present disclosure.

### [Description of Configuration]

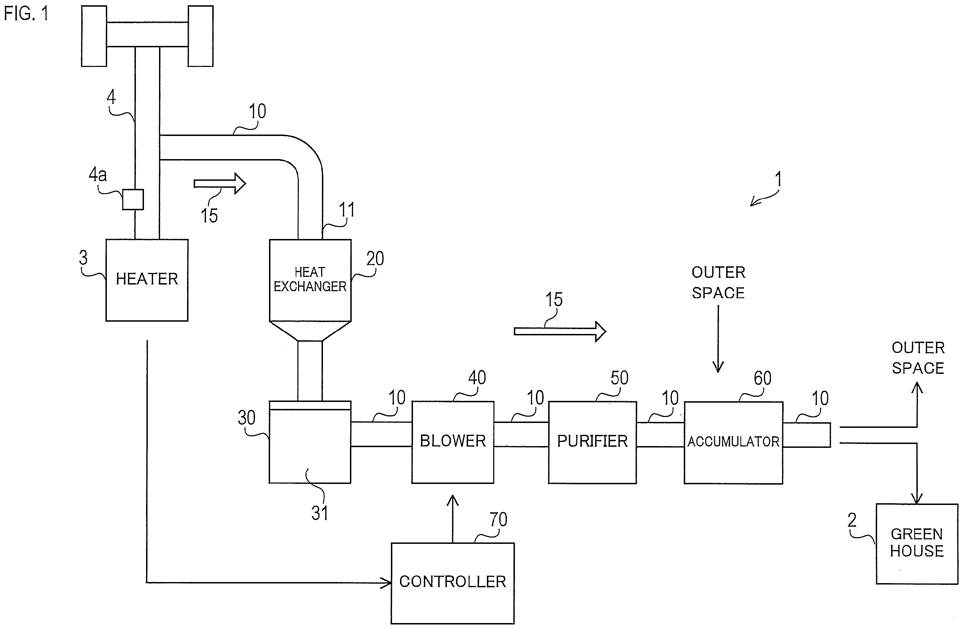

A carbon dioxide supply device 1 of the present embodiment in FIG. 1 is used for a greenhouse 2 for cultivating a plant. Specifically, the greenhouse 2 may be used for facility horticulture. The greenhouse 2 includes a heater 3 that heats the inside of the greenhouse 2 (hereinafter, simply described as an inner space) in order to facilitate growth of the plant. The heater 3 heats the inner space by combustion of a fuel, such as kerosene, heavy oil, or the like.

The carbon dioxide supply device 1 purifies exhaust gas that is emitted from the heater 3 when the inner space is heated by the heater 3 during night-time and accumulates carbon dioxide contained in the exhaust gas. Then, the carbon dioxide supply device 1 releases exhaust gas, on which purification or the like is performed, to the outside of the greenhouse 2 (hereinafter, simply described as an outer space). In other words, the carbon dioxide supply device 1 includes a function as a purification device to purify the exhaust gas generated by heating provided by the heater 3. Then, during day-time, the carbon dioxide supply device 1 supplies the inner space with accumulated carbon dioxide. This facilitates photosynthesis of the plant located in the inner space.

The carbon dioxide supply device 1 comprises an exhaust gas flow path 10, a heat exchanger 20, a neutralization tank 30, a blower 40, a purifier 50, an accumulator 60, and controller 70.

The exhaust gas flow path 10 is a flow path to carry the exhaust gas along a downstream direction 15. In the heater 3, the exhaust gas generated by the combustion is released outside of the heater 3 through an emission flow path 4. The exhaust gas flow path 10 is coupled to the emission flow path 4 of the heater 3 for the exhaust gas (in other words, a chimney). In one example, in the present embodiment, the exhaust gas flow path 10 extends horizontally or substantially horizontally from a coupling point thereof to the emission flow path 4 that extends vertically or substantially. An entirety or a portion of the exhaust gas flowing through the emission flow path 4 flows into the exhaust gas flow path 10.

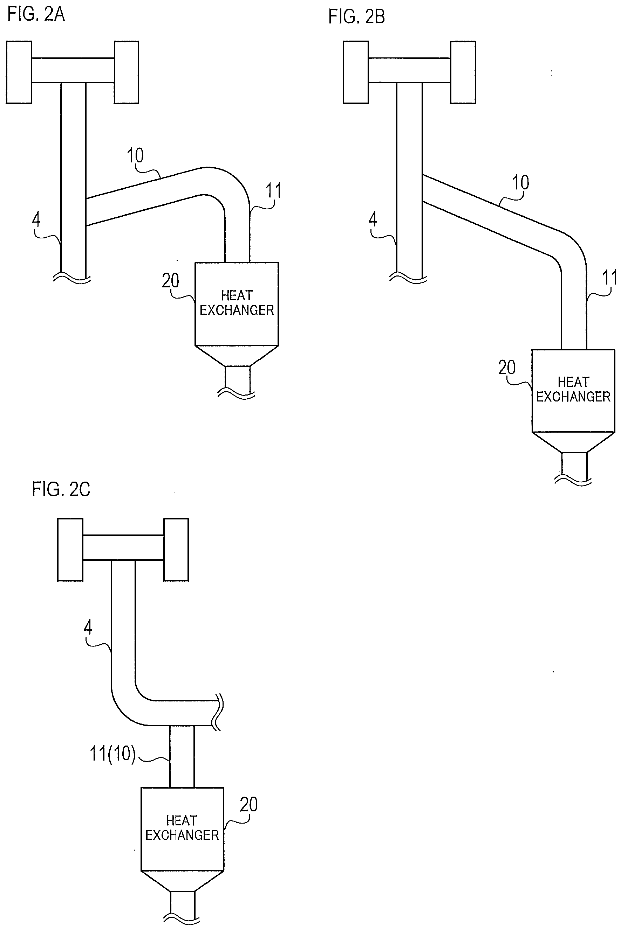

Here, as shown in FIGS. 2A and 2B, the exhaust gas flow path 10 may extend, for example, in a direction to have an upward inclination or a downward inclination from the coupling point situated in the emission flow path 4 that extends vertically or substantially vertically. Alternatively, as shown in FIG. 2C, the exhaust gas flow path 10 may extend downwardly from the coupling point situated in a section that extends horizontally or substantially horizontally in the emission flow path 4.

The exhaust gas flow path 10 includes a downward section 11. The downward section 11 directs downwardly as extending along the downstream direction 15. In the present embodiment, in one example, the downward section 11 extends vertically or substantially vertically in a linear manner. However, in a downstream side along the downstream direction 15, the downward section 11 may be formed to be inclined downwardly, for example. Further, the downward section 11 may be formed in a curving or bending manner, for example.

The heat exchanger 20 is situated in a specified arrangement position in the downward section 11. The heat exchanger 20 cools the exhaust gas flowing through the arrangement position in the downward section 11 with a coolant from a lateral side of the downward section 11. In the present embodiment, liquid including water is used as the coolant, in one example. However, air or the like may be used as the coolant in addition to the liquid, for example. Further, the carbon dioxide supply device 1 may circulate the coolant along a specified channel. The carbon dioxide supply device 1 may also dissipate heat accumulated in the coolant with a heat dissipation member disposed on the channel.

The neutralization tank 30 is situated downstream of the heat exchanger 20 along the downstream direction 15 in the exhaust gas flow path 10. More specifically, the neutralization tank 30 is coupled to a downstream end of the downward section 11 along the downstream direction 15. The neutralization tank 30 stores a purifying solution 31. In one example, the purifying solution 31 may be an alkaline solution. The exhaust gas flowing through the exhaust gas flow path 10 contacts the purifying solution 31 stored in the neutralization tank 30 while passing through the neutralization tank 30. Specifically, the exhaust gas passes through the inside of the purifying solution 31 and then flows out of the neutralization tank 30. During this, the sulfur oxide, nitrogen oxide, or the like contained in the exhaust gas are removed.

The blower 40 is situated downstream of the neutralization tank 30 along the downstream direction 15 in the exhaust gas flow path 10. The blower 40 compresses gas present in the exhaust gas flow path 10, to thereby carry the gas present in the exhaust gas flow path 10 along the downstream direction 15. As a result, the exhaust gas flowing through the emission flow path 4 of the heater 3 flows into the exhaust gas flow path 10 to flow through the exhaust gas flow path 10 along the downstream direction 15. Here, the blower 40 may be replaced with a fan or the like, for example, to carry the gas present in the exhaust gas flow path 10 along the downstream direction 15.

The purifier 50 is situated downstream of the blower 40 along the downstream direction 15 in the exhaust gas flow path 10. The exhaust gas flowing through the exhaust gas flow path 10 passes through the purifier 50. During this, a toxic substance that adversely affects plant growth (for example, nitrogen oxide, carbon monoxide or the like) is removed from the exhaust gas. Specifically, the purifier 50 may bring the toxic substance contained in the exhaust gas into adsorption on activated carbon to remove the toxic substance, for example. Alternatively, the purifier 50 may bring the toxic substance contained in the exhaust gas into oxidation with an oxidation catalyst to remove the toxic substance, for example.

The accumulator 60 is situated downstream of the purifier 50 along the downstream direction 15 in the exhaust gas flow path 10. The accumulator 60 accumulates the carbon dioxide contained in the exhaust gas. Accumulated carbon dioxide is supplied into the inner space. The accumulator 60 includes at least one adsorption portion, which is a collected body of a powdered or granular adsorbent for the carbon dioxide. The adsorbent may be the activated carbon, the zeolite, or the like, for example.

The exhaust gas flowing through the exhaust gas flow path 10 passes through the inside of the at least one adsorption portion. During this, the carbon dioxide contained in the exhaust gas is adsorbed on the at least one adsorption portion. As a result, the carbon dioxide contained in the exhaust gas is accumulated in the accumulator 60. Then, the exhaust gas including a decreased concentration of the carbon dioxide flows out of the at least one adsorption portion.

Further, when air passes through the inside of the at least one adsorption portion, the carbon dioxide adsorbed on the at least one adsorption portion flows outside the at least one adsorption portion together with the air. As a result, the air passing through the at least one adsorption portion contains carbon dioxide with an increased concentration. The air passing through the at least one adsorption portion flows into the inner space, to thereby supply the accumulated carbon dioxide in the accumulator 60 with the inner space.

The controller 70 controls operational condition of the blower 40 and opening and closing conditions of a not shown valve that is arranged in the exhaust gas flow path 10 and the like. This controls a flow of the exhaust gas and the like in the carbon dioxide supply device 1. The controller 70 may be mainly configured with a known computer that includes a CPU, a RAM, a ROM, a memory device, and the like. Here, the memory device may be an erasable non-volatile memory device (for example, a HDD or the like). The CPU of the controller 70 executes a program loaded on the RAM from the memory device to perform various processes. This controls the carbon dioxide supply device 1. Here, the memory device and the RAM correspond to a non-transitory tangible computer readable medium. Further, the controller 70 may be configured with multiple digital circuits and the like. The controller 70 may perform the various processes with a hardware instead of a software.

### [Description of Operation]

A description will be first given to an operation of the carbon dioxide supply device 1 in performing purification of the exhaust gas and an operation in performing accumulation of the carbon dioxide contained in the exhaust gas.

The controller 70 of the carbon dioxide supply device 1 opens a source end valve that is situated proximal to a source end of the exhaust gas flow path 10 (in other words, proximal to the coupling point between the emission flow path 4 and the exhaust gas flow path 10) and operates the blower 40 when the heater 3 initiates heating during nigh-time. As a result, the entirety of or the portion of the exhaust gas emitted from the emission flow path 4 flows into the exhaust gas flow path 10. The exhaust gas then flows through the exhaust gas flow path 10 along the downstream direction 15.

The heater 3 may output an ignition signal for the controller 70. The ignition signal is a signal that indicates whether the heating is performed by the heater 3. The controller 70 may detect that the heating is initiated by the heater 3 based on the ignition signal input from the heater 3. Additionally, the emission flow path 4 may include a temperature sensor 4a to measure a temperature of the inside of the emission flow path 4. The temperature sensor 4a may output a temperature signal for the controller 70 to indicate a temperature of the emission flow path 4. Then, the controller 70 may detect that the heating is initiated by the heater 3 when the temperature indicated by the temperature signal reaches a specified threshold.

The exhaust gas flowing into the exhaust gas flow path 10 is cooled by the heat exchanger 20 during passage of the exhaust gas through the downward section 11. This condenses vapor contained in the exhaust gas and then generates condensed water. Here, the downward section 11 directs downward as extending along the downstream direction 15 and therefore, the condensed water flows along the downstream direction 15 through the downward section 11 and flows into the purifying solution 31 stored in the neutralization tank 30.

The exhaust gas passing through the downward section 11 reaches the neutralization tank 30. The exhaust gas passes through the purifying solution 31 and then flows out downstream of the neutralization tank 30 along the downstream direction 15. The exhaust gas passing through the neutralization tank 30 passes through the purifier 50. Passage through the neutralization tank 30 and the purifier 50 purifies the exhaust gas.

Then, the exhaust gas passing through the purifier 50 reaches the accumulator 60. The exhaust gas passes through the at least one adsorption portion of the accumulator 60 and flows out downstream of the accumulator 60 along the downstream direction 15. During this, the carbon dioxide contained in the exhaust gas is accumulated in the accumulator 60. Then, the exhaust gas passing through the accumulator 60 flows into the outer space.

A description is now given to an operation of the carbon dioxide supply device 1 in supplying the carbon dioxide accumulated in the accumulator 60 with the inner space. The controller 70 performs supply of the carbon dioxide during the day-time. Specifically, the controller 70 closes the source end valve. Further, the controller 70 opens another valve other than the source end valve while operating the blower 40. This enables the air to flow into the exhaust gas flow path 10 through another flow path and flow toward the accumulator 60.

The air reaching the accumulator 60 passes through the at least one adsorption portion of the accumulator 60 and flows out downstream of the accumulator 60 along the downstream direction 15. During this, the carbon dioxide adsorbed on the at least one adsorption portion flows out of the accumulator 60 together with the air. Then, the air flows into the inner space. This supplies the carbon dioxide accumulated in the accumulator 60 with the inner space.

### [Effect]

(1) The carbon dioxide supply device 1 of the above-described embodiment enables the exhaust gas to be cooled when the exhaust gas flows through the downward section 11 of the exhaust gas flow path 10. The downward section 11 directs downward as extending downstream along the downstream direction 15. Therefore, the condensed water derived from cooling is flowed through the downward section 11 along the downstream direction 15 and is inhibited from staying in one location. Additionally, the condensed water is inhibited from flowing opposite to the downstream direction 15 (in other words, from flowing through the exhaust gas flow path 10 in reverse). Therefore, it is possible to inhibit the condensed water from flowing into the emission flow path 4 of the heater 3. Accordingly, it is possible to inhibit the corrosion caused by the condensed water generated by the cooling of the exhaust gas.
(2) In a lower end, the downward section 11 is coupled to the neutralization tank 30. As a result, the condensed water generated through the cooling of the exhaust gas is guided to the purifying solution 31 of the neutralization tank 30 through the downward section 11. This enables purification of the condensed water with the purifying solution 31 and elimination of corrosive activity of the condensed water. Therefore, it is possible to inhibit corrosion of the carbon dioxide supply device 1 caused by the condensed water.
(3) The purifier 50 is situated downstream of the neutralization tank 30 along the downstream direction 15 and therefore, the nitrogen oxide, the carbon monoxide, and the like contained in the exhaust gas are removed from the exhaust gas. As a result, it is possible to release the exhaust gas into the atmosphere and into the inner space.
(4) In the accumulator 60, the carbon dioxide supply device 1 can accumulate the carbon dioxide that is generated by the heating of the inner space during the night-time and is contained in the exhaust gas. Then, the carbon dioxide supply device 1 supplies the accumulated carbon dioxide in the accumulator 60 with the inner space during the day-time. Therefore, it is possible to facilitate the growth of the crop cultivated in the greenhouse 2.
(5) The carbon dioxide supply device 1 detects that the heating is initiated by the heater 3 based, for example, on the temperature signal from the temperature sensor 4a or the ignition signal from the heater 3. In response to detection that the heating is initiated, the carbon dioxide supply device 1 allows the exhaust gas to flow into the exhaust gas flow path 10 from the emission flow path 4, and then purifies the exhaust gas and accumulates the carbon dioxide contained in the exhaust gas. Therefore, it is possible to surely purify the exhaust gas while the greenhouse 2 is heated.

### [Other Embodiments]

(1) The carbon dioxide supply device 1 of the above-described embodiment may exclude respective functions to accumulate and supply the carbon dioxide to configure the purification device. In other words, the purification device may be configured to comprise the exhaust gas flow path 10, the heat exchanger 20, the neutralization tank 30, the blower 40, and the purifier 50 of the carbon dioxide supply device 1 and to exclude the accumulator 60. This purification device may be used to purify the exhaust gas emitted through the heating of the greenhouse 2 provided by the heater 3, which is performed regardless of the time of day or night. In this case, the purification device may release purified exhaust gas into the inner space or the outer space.
(2) In the carbon dioxide supply device 1 of the above-described embodiment, the accumulator 60 includes the at least one adsorption portion, which is the collected body of the adsorbent for the carbon dioxide. The at least one adsorption portion is simply brought into contact with the exhaust gas or the air without mechanical pressurization and heating, to thereby accumulate the carbon dioxide and supply the carbon dioxide. However, the accumulator 60 may accumulate the carbon dioxide and supply the carbon dioxide by a method such as pressure swinging or the like that involves the mechanical pressurization, for example. Further, the accumulator 60 may accumulate the carbon dioxide and supply the carbon dioxide with the heating. In this case, lithium composite oxide may be used as a member to accumulate the carbon dioxide, for example.
(3) In the carbon dioxide supply device 1 of the above-described embodiment, the exhaust gas flow path 10 branches from the emission flow path 4 of the heater 3. As a result, the portion of the exhaust gas emitted from the heater 3 flows into the exhaust gas flow path 10. However, the carbon dioxide supply device 1 may be configured such that the entirety of the exhaust gas emitted from the heater 3 flows into the exhaust gas flow path 10.

## Claims

1. A purification device (1) for purifying exhaust gas generated by combustion to heat a greenhouse (2) for plant cultivation, the purification device comprising:
an exhaust gas flow path (10) for carrying the exhaust gas along a specified downstream direction (15), the exhaust gas flow path including a cooling section (11) that directs downward as extending along the downstream direction;
a downstream portion (40, 70) for carrying the exhaust gas generated by the combustion into the exhaust gas flow path and for carrying the exhaust gas through the exhaust gas flow path along the downstream direction;
a cooler (20) for cooling the exhaust gas flowing through the cooling section; and
a purifying solution accumulator (30) that is situated downstream of the cooler along the downstream direction in the exhaust gas flow path, for storing a purifying solution (31) to purify the exhaust gas, and for bringing the exhaust gas flowing through the exhaust gas flow path into contact with the purifying solution,
wherein the exhaust gas flow path further includes a flow-in section (11) for carrying condensed water generated by cooling of the exhaust gas by the cooler (20) into the purifying solution accumulated in the purifying solution accumulator (30).

2. The purification device (1) according to claim 1, further comprising:
a purifier (50) that is situated downstream of the purifying solution accumulator (30) along the downstream direction in the exhaust gas flow path (10) , for purifying the exhaust gas flowing through the exhaust gas flow path.

3. The purification device (1) according to claim 2, further comprising:
an accumulator (60) that is situated downstream of the purifier (50) along the downstream direction in the exhaust gas flow path (10) , for accumulating carbon dioxide contained in the exhaust gas flowing through the exhaust gas flow path; and
a supplier (10, 40, 70) for supplying the carbon dioxide accumulated in the accumulator with the greenhouse.

4. The purification device (1) according to any one of claims 1 to 3, further comprising:
a detector (4a, 70) for detecting that the combustion is performed to heat the greenhouse (2),
wherein the downstream portion (40, 70) carries the exhaust gas into the exhaust gas flow path (10) in response to detection of the combustion by the detector (4a, 70) and carries the exhaust gas through the exhaust gas flow path along the downstream direction.

## Patentansprüche

1. Reinigungsvorrichtung (1) zum Reinigen von durch Verbrennung zum Heizen eines Treibhauses (2) zur Pflanzenkultivierung erzeugtem Abgas, wobei die Reinigungsvorrichtung Folgendes umfasst:
einen Abgasströmungspfad (10) zum Transportieren des Abgases entlang einer spezifischen stromabwärtigen Richtung (15), wobei der Abgasströmungspfad einen Kühlabschnitt (11) umfasst, der der nach unten führt, wenn er sich entlang der stromabwärtigen Richtung erstreckt;
einen stromabwärtigen Teil (40, 70) zum Transportieren des durch die Verbrennung erzeugten Abgases in den Abgasströmungspfad und zum Transportieren des Abgases durch den Abgasströmungspfad entlang der stromabwärtigen Richtung;
einen Kühler (20) zum Kühlen des Abgases, das durch den Kühlabschnitt strömt; und
einen Reinigungslösungsakkumulator (30), der stromabwärts des Kühlers entlang der stromabwärtigen Richtung im Abgasströmungspfad befindlich ist, zum Speichern einer Reinigungslösung (31) zum Reinigen des Abgases und zum Inkontaktbringen des Abgases, das durch den Abgasströmungspfad strömt, mit der Reinigungslösung, wobei der Abgasströmungspfad ferner einen Einströmabschnitt (11) zum Transportieren von kondensiertem Wasser, das durch Kühlen des Abgases durch den Kühler (20) erzeugt wurde, in die im Reinigungslösungsakkumulator (30) gesammelte Reinigungslösung.

2. Reinigungsvorrichtung (1) nach Anspruch 1, die ferner Folgendes umfasst:
einen Reiniger (50), der sich stromabwärts des Reinigungslösungsakkumulators (30) entlang der stromabwärtigen Richtung im Abgasströmungspfad (10) befindet, zum Reinigen des Abgases, das durch den Abgasströmungspfad strömt.

3. Reinigungsvorrichtung (1) nach Anspruch 2, die ferner Folgendes umfasst:
einen Akkumulator (60), der sich stromabwärts des Reinigers (50) entlang der stromabwärtigen Richtung im Abgasströmungspfad (10) befindet, zum Sammeln von Kohlendioxid, das im Abgas enthalten ist, das durch den Abgasströmungspfad strömt; und
eine Zuführvorrichtung (10, 40, 70) zum Zuführen des im Akkumulator gesammelten Kohlendioxids mit dem Treibhaus.

4. Reinigungsvorrichtung (1) nach einem der Ansprüche 1 bis 3, die ferner Folgendes umfasst:
einen Detektor (4a, 70) zum Detektieren, dass die Verbrennung durchgeführt wird, um das Treibhaus (2) zu heizen,
wobei der stromabwärtige Teil (40, 70) in Reaktion auf Detektion der Verbrennung durch den Detektor (4a, 70) das Abgas in den Abgasströmungspfad (10) transportiert und das Abgas durch den Abgasströmungspfad entlang der stromabwärtigen Richtung transportiert.

## Revendications

1. Dispositif de purification (1) destiné à purifier un gaz d'échappement produit par combustion pour chauffer une serre (2) pour la culture de plantes, le dispositif de purification comprenant :
un trajet d'écoulement (10) de gaz d'échappement pour transporter le gaz d'échappement le long d'une direction aval spécifiée (15), le trajet d'écoulement de gaz d'échappement comprenant une section de refroidissement (11) qui se dirige vers le bas à mesure qu'elle s'étend le long de la direction aval ;
une partie aval (40, 70) pour transporter le gaz d'échappement généré par la combustion vers le trajet d'écoulement de gaz d'échappement et pour transporter le gaz d'échappement à travers le trajet d'écoulement de gaz d'échappement le long de la direction aval ;
un refroidisseur (20) pour refroidir le gaz d'échappement s'écoulant à travers la section de refroidissement ; et
un accumulateur (30) de solution de purification qui est situé en aval du refroidisseur le long de la direction aval dans le trajet d'écoulement de gaz d'échappement, pour stocker une solution de purification (31) afin de purifier le gaz d'échappement, et pour amener le gaz d'échappement circulant à travers le trajet d'écoulement de gaz d'échappement en contact avec la solution de purification,
dans lequel le trajet d'écoulement de gaz d'échappement comprend en outre une section d'entrée (11) pour transporter l'eau condensée générée par un refroidissement du gaz d'échappement par le refroidisseur (20) vers la solution de purification accumulée dans l'accumulateur (30) de solution de purification.

2. Dispositif de purification (1) selon la revendication 1, comprenant en outre :
un purificateur (50) qui est situé en aval de l'accumulateur (30) de solution de purification le long de la direction aval dans le trajet d'écoulement (10) de gaz d'échappement, afin de purifier le gaz d'échappement circulant à travers le trajet d'écoulement de gaz d'échappement.

3. Dispositif de purification (1) selon la revendication 2, comprenant en outre :
un accumulateur (60) qui est situé en aval du purificateur (50) le long de la direction aval dans le trajet d'écoulement (10) de gaz d'échappement, pour accumuler le dioxyde de carbone contenu dans le gaz d'échappement s'écoulant à travers le trajet d'écoulement de gaz d'échappement ; et
un système d'alimentation (10, 40, 70) pour fournir à la serre le dioxyde de carbone accumulé dans l'accumulateur.

4. Dispositif de purification (1) selon l'une quelconque des revendications 1 à 3, comprenant en outre :
un détecteur (4a, 70) permettant de détecter que la combustion est réalisée pour chauffer la serre (2),
dans lequel la partie aval (40, 70) transporte le gaz d'échappement vers le trajet d'écoulement (10) de gaz d'échappement en réponse à la détection de la combustion par le détecteur (4a, 70) et transporte le gaz d'échappement à travers le trajet d'écoulement de gaz d'échappement le long de la direction aval.
